# EUROPEAN PATENT APPLICATION

(11) **EP 2 444 661 A1**
(43) Date of publication of application: **25.04.2012**
(21) Application number: 09846147.8
(22) Date of filing: 16.06.2009
(51) Int. Cl.: F03D 11/00, F03D 7/04

(54) **WIND-DRIVEN GENERATOR**

(71) Applicant: Mitsubishi Heavy Industries, Ltd., Tokyo 108-8215 (JP)
(72) Inventor: NODA, Yoshitomo, Tokyo 108-8215 (JP); NUMAJIRI, Tomohiro, Tokyo 108-8215 (JP); YANO, Akihiko, Tokyo 108-8215 (JP); NISHIDA, Hideaki, Tokyo 108-8215 (JP); YOSHIDA, Takafumi, Tokyo 108-8215 (JP)
(74) Representative: Intès, Didier Gérard André
(86) International application number: PCT/JP2009/060906
(87) International publication number: WO 2010/146654

(57) **Abstract**

Size enlargement of a wind turbine generator is facilitated by eliminating various problems that occur with a bearing that joins a tower (2) and a nacelle. In a wind turbine generator that turnably supports a nacelle installed at the top portion of a tower (2) via a yawing sliding bearing (30), a sliding bearing member (33) of the yawing sliding bearing (30) is provided on at least one of an inner circumferential surface side and an outer circumferential side of the tower (2), and the side-surface length (H) of the sliding bearing member (33) is set to be at least twice the horizontal-direction length (L) of the sliding bearing member.

## Description

### Technical Field

The present invention relates to a wind turbine generator in which power is generated by a generator driven by a main shaft that rotates by receiving wind force, and it relates, in particular, to a yawing (YAW) ring bearing structure of a wind turbine generator.

### Background Art

A wind turbine generator is a device in which a rotor head provided with turbine blades rotates by receiving wind force, and this rotation is sped up by a gearbox to drive a generator, thereby generating power. In addition, because the rotor head provided with the turbine blades is connected with the gearbox and the generator in a nacelle installed at a top portion of a tower (support pillar), in order to match the orientation of the rotor head with the constantly changing wind direction, a yawing device for turning the nacelle on the tower is required.

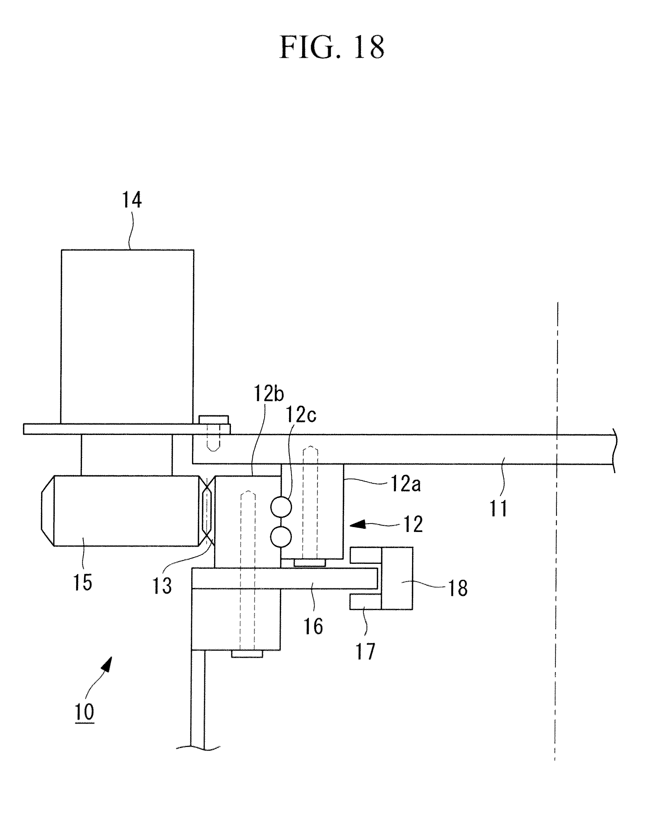

Fig. 18 shows an example configuration of a conventional yawing device.
In a yawing device 10 shown in Fig. 18, a rolling bearing 12 is employed, in which ball bearings 12c or the like are interposed between an inner ring 12a secured to a base member (nacelle base plate) 11 on a nacelle side, which turns on the tower, and an outer ring 12b secured to a tower side, which is stationary. That is, in the illustrated yawing device 10, the rolling bearing 12 is employed as a yawing ring bearing.

The yawing device 10 in this case is provided with a stationary gear 13 formed on an outer circumferential surface of the outer ring 12b and a drive gear 15 that is rotated by a yawing motor 14 secured on the nacelle side. Thus, by engaging the drive gear 15 with the stationary gear 13, the drive gear 15 revolves around the stationary gear 13 in accordance with the rotation direction of the yawing motor 14; therefore, the base member 11 and the yawing motor 14 turn, together with the drive gear 15, clockwise or counter-clockwise relative to the stationary tower.
Note that, reference numeral 16 in the figure is a brake disk, 17 is a brake pad, and 18 is a brake bracket.

In addition, among conventional wind turbine generators, there are those that employ a sliding bearing as the yawing ring bearing described above (for example, see Patent Citation 1).
The sliding bearing in this case bears a moment load mainly with flat portions of a top surface and a bottom surface formed at the top portion of the tower, and the flat portions that come in contact with the sliding bearing are secured to the nacelle side. Note that, the flat portions in this case are formed only at one of an inner side or an outer side of the tower.
Patent Citation 1: Japanese Translation of PCT International Application, Publication No. 2003-518594.

### Disclosure of Invention

In recent years, wind turbine generators are increasingly becoming larger, and, with the size enlargement, problems such as the following have been pointed out.
Specifically, increasing the size of a wind turbine generator inevitably increases the size of a bearing that joins the tower and the nacelle. Accordingly, particularly when employing a rolling bearing as the yawing ring bearing, custom-made parts become necessary due to increases in the bearing diameter and the bearing ball diameter; therefore, increased costs of the bearing becomes a problem. In addition, when employing a rolling bearing, transportation with the bearing itself being divided is difficult; therefore, problems that arise with the size enlargement of the bearing are that land transportation limits are exceeded and land transportation costs are increased.

On the other hand, when a sliding bearing is employed as a yawing ring bearing, a problem with a self-aligning property (uneven wear) arises. That is, because a moment in a direction that tips over a wind turbine generator acts on the wind turbine generator due to wind load, a conventional yawing ring bearing employing a sliding bearing has a risk of causing uneven wear due to uneven contact because of the flat-surface support, and, when the uneven wear occurs, it causes rattling at the top of the tower, thus presenting a problem in that the top portion of the tower becomes unstable.

In addition, with the size enlargement of wind turbine generators, problems also arise with the ease of on-site assembly. That is, as the tower becomes taller, the rotor blades, the nacelle, etc. also become larger; therefore, crane costs (construction costs) increase due to the enlarged size of the crane employed. Moreover, because a bearing conventionally is connected between the tower side and the nacelles side while the nacelle is being hoisted, it takes many processes and causes construction costs to increase.

In addition, because of the moment in the tip-over direction described above, bolts that connect the yawing ring bearing and the top portion of the tower and bolts that join the yawing ring bearing and the nacelle are disposed in a vertical direction and bear tensile or compressive load. Thus, the number of bolts is determined depending on the bolt strength and, furthermore, the diameter of the top portion of the tower is determined by the number (arrangement) of bolts; therefore, when attempting to increase the size of a winder turbine generator, the diameter of the top portion of the tower becomes large, and, because the size of a nacelle base plate is determined by the diameter of the top portion of the tower, the weight of the nacelle base plate also increases.

Against such a background, with the size enlargement of wind turbine generators, there is a demand for facilitating the size enlargement of wind turbine generators by eliminating various problems arising with regard to the bearing that connects the tower and the nacelle.
The present invention has been conceived in light of the above-described circumstances, and an object thereof is to provide a wind turbine generator that facilitates the size enlargement by eliminating various problems arising with regard to the bearing that connects the tower and the nacelle.

In order to solve the above-described problems, the present invention employs the following solutions.
A wind turbine generator according to Claim 1 is a wind turbine generator that turnably supports a nacelle installed at the top of a tower via a yawing sliding bearing, wherein a sliding bearing member of the yawing sliding bearing is provided on at least one of an inner circumferential surface side and an outer circumferential side of the tower, and the side-surface length (H) of the sliding bearing member is set to be at least twice the horizontal-direction length (L) of the sliding bearing member.

With such a wind turbine generator according to Claim 1, because the sliding bearing member of the yawing sliding bearing is provided on at least one of the inner circumferential side and the outer circumferential side of the tower, by employing a sliding bearing structure that can have a divided construction, assembly is facilitated through a process of inserting sliding portions into the nacelle side from the top portion of the tower. In addition, because the side-surface length (H) of the sliding bearing member is set to be at least twice the horizontal-direction length (L) of the sliding bearing member, a moment load, in the tip-over direction of the tower, that is considerably greater than its own weight can be reliably borne.

In a wind turbine generator according to Claim 2, a nacelle installed at the top of a tower is turnably supported via a yawing sliding bearing that bears a moment load in a tip-over direction mainly at top and bottom flat portions thereof; a sliding bearing member of the yawing sliding bearing is provided on at least one of an inner circumferential surface side and an outer circumferential side of the tower; and the sliding bearing member is secured on the tower side.

In such a wind turbine generator according to Claim 2, the nacelle installed at the top of the tower is turnably supported via the yawing sliding bearing that bears the moment load in the tip-over direction mainly with the top and bottom flat portions thereof; the sliding bearing members of the yawing sliding bearing are provided on at least one of the inner circumferential surface side and the outer circumferential side of the tower; and the sliding bearing members are secured on the tower side; therefore, it is possible to employ a sliding bearing structure that can have a divided construction.
In particular, because the sliding bearing members of the yawing sliding bearing are provided on at least one of the inner circumferential side and the outer circumferential side of the tower and the sliding bearing members are secured on the tower side, the yawing sliding bearing mounted on the wind turbine generator can be accessed from the interior of the tower, thereby making it possible to obtain excellent maintainability.

In a wind turbine generator according to Claim 3, a nacelle installed at the top of a tower is turnably supported via a yawing sliding bearing that bears a moment load in a tip-over direction mainly at top and bottom flat portions thereof; sliding bearing members of the yawing sliding bearing are provided on both an inner circumferential surface side and an outer circumferential side of the tower; and the sliding bearing members are secured on the nacelle side.

In such a wind turbine generator according to Claim 3, the nacelle installed at the top of the tower is turnably supported via the yawing sliding bearing that bears the moment load in the tip-over direction mainly with the top and bottom flat portions thereof; the sliding bearing members of the yawing sliding bearing are provided on both the inner circumferential surface side and the outer circumferential side of the tower; and the sliding bearing members are secured on the nacelle side; therefore, it is possible to reduce the diameter at the top portion of the tower by employing a sliding bearing structure that can have a divided construction.
That is, by forming the top portion of the tower in a T-shape and by disposing the sliding bearing members on both the inner circumferential side and the outer circumferential side of the tower, bolts that join the top portion of the tower and the yawing sliding bearing or the nacelle and the yawing sliding bearing can be symmetrically disposed on the inner circumferential side and the outer circumferential side of the tower with the wall of the tower therebetween. Accordingly, the load that acts on each bolt can be reduced. Therefore, it is possible to reduce the diameter at the top portion of the tower by reducing the number of the bolts for the inner circumferential side and the outer circumferential side.

With a wind turbine generate described in one of Claims 1 to 3 described above, it is preferable that contact surfaces of the sliding bearing member(s) in the horizontal direction be curved surfaces or inclined surfaces having centers thereof on an axis of the tower; accordingly, an excellent self-aligning property can be obtained.

A wind turbine generate described in one of Claims 1 to 4 described above is preferably provided with elastic members be provided that bias the sliding bearing member(s) in directions of contact surfaces thereof, wherein base members of the elastic members are pivotingly supported; accordingly, an excellent self-aligning property can be obtained.

With a wind turbine generator of the present invention, significant advantages are afforded in that, by employing a yawing bearing having a dividable construction as a bearing that joins a tower and a nacelle, various problems that arise in a turning bearing with size enlargement are solved, thereby facilitating the size enlargement of the wind turbine generator.

### Brief Description of Drawings

[FIG. 1] Fig. 1 is a longitudinal sectional view showing relevant portions of a yawing sliding bearing structure that supports turning of a nacelle, which shows a first embodiment of a wind turbine generator according to the present invention.
[FIG. 2A] Fig. 2A is a longitudinal sectional view showing, in outline, the yawing sliding bearing structure shown in Fig. 1.
[FIG. 2B] Fig. 2B is a plan view showing, in outline, the yawing sliding bearing structure shown in Fig. 1.
[FIG. 3] Fig. 3 is a side view showing, in outline, a wind turbine generator.
[FIG. 4] Fig. 4 is a longitudinal sectional view showing a first modification of the yawing sliding bearing structure in Fig. 2A.
[FIG. 5] Fig. 5 is a longitudinal sectional view showing a second modification of the yawing sliding bearing structure in Fig. 2A.
[FIG. 6] Fig. 6 is a longitudinal sectional view showing a third modification of the yawing sliding bearing structure in Fig. 2A.
[FIG. 7] Fig. 7 is a longitudinal sectional view showing a fourth modification of the yawing sliding bearing structure in Fig. 2A.
[FIG. 8] Fig. 8 is a longitudinal sectional view showing a fifth modification of the yawing sliding bearing structure in Fig. 2A.
[FIG. 9] Fig. 9 is a longitudinal sectional view showing a sixth modification with regard to the yawing sliding bearing structure in Fig. 2A.
[FIG. 10] Fig. 10 is a longitudinal sectional view showing a seventh modification of the yawing sliding bearing structure in Fig. 2A.
[FIG. 11A] Fig. 11A is a sectional view of relevant portions showing a support structure of a sliding bearing member in a yawing sliding bearing structure and shows an example structure that biases with a spring.
[FIG. 11B] Fig. 11B is a sectional view of relevant portions showing a support structure of a sliding bearing member in a yawing sliding bearing structure and shows an example structure in which biasing by a spring and pivot support are combined.
[FIG. 12] Fig. 12 is a longitudinal sectional view showing, in outline, a yawing sliding bearing structure that supports turning of a nacelle, which shows a second embodiment of a wind turbine generator according to the present invention.
[FIG. 13] Fig. 13 is a longitudinal sectional view showing a first modification of the yawing sliding bearing structure in Fig. 12.
[FIG. 14] Fig. 14 is a longitudinal sectional view showing a second modification of the yawing sliding bearing structure in Fig. 12.
[FIG. 15] Fig. 15 is a longitudinal sectional view showing, in outline, a yawing sliding bearing structure that supports turning of a nacelle, which shows a third embodiment of a wind turbine generator according to the present invention.
[FIG. 16] Fig. 16 is a longitudinal sectional view showing, in outline, a yawing sliding bearing structure that supports turning of a nacelle, which shows a fourth embodiment of a wind turbine generator according to the present invention.
[FIG. 17A] Fig. 17A is a longitudinal sectional view showing, in outline, a yawing sliding bearing structure that supports turning of a nacelle, which shows a fifth embodiment of a wind turbine generator according to the present invention.
[FIG. 17B] Fig. B is a sectional view showing a support structure of a sliding bearing member applied to the yawing sliding bearing structure in Fig. 17A.
[FIG. 18] Fig. 18 is a longitudinal sectional view showing relevant portions of a yawing rolling bearing structure that supports turning of a nacelle, which shows a conventional structure of a wind turbine generator.

### Explanation of Reference:

- 1:: wind turbine generator
- 2:: tower (support pillar)
- 2a:: cylindrical member
- 2a':: double-walled cylindrical member
- 2b:: tower body
- 2c:: flange portion
- 3:: nacelle
- 20:: yawing device
- 21:: stationary gear
- 22:: base member (nacelle base plate)
- 23:: yawing motor
- 24:: drive gear
- 30, 30A, 30B, 30C, 30D:: yawing sliding bearing
- 31, 31A, 31B:: stationary portion
- 32, 32A, 32B:: turning portion
- 33,: 33A: vertical sliding bearing member (vertical bearing member)
- 34:: horizontal sliding bearing member (horizontal bearing member)
- 35:: inclined bearing member
- 36:: curved bearing member
- 37:: elastic member
- 38:: pressing plate
- 38a:: protruding portion
- 39:: horizontal opposing plates
- 40:: horizontal flange portion

### Best Mode for Carrying Out the Invention

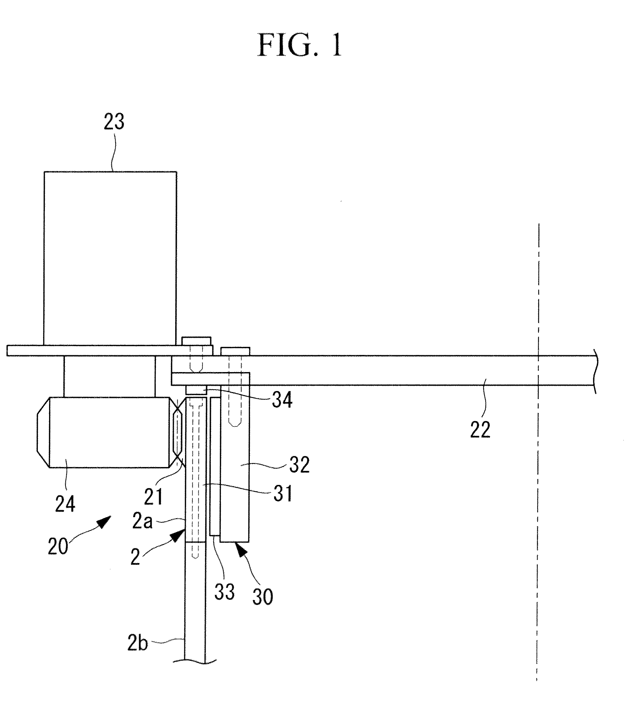

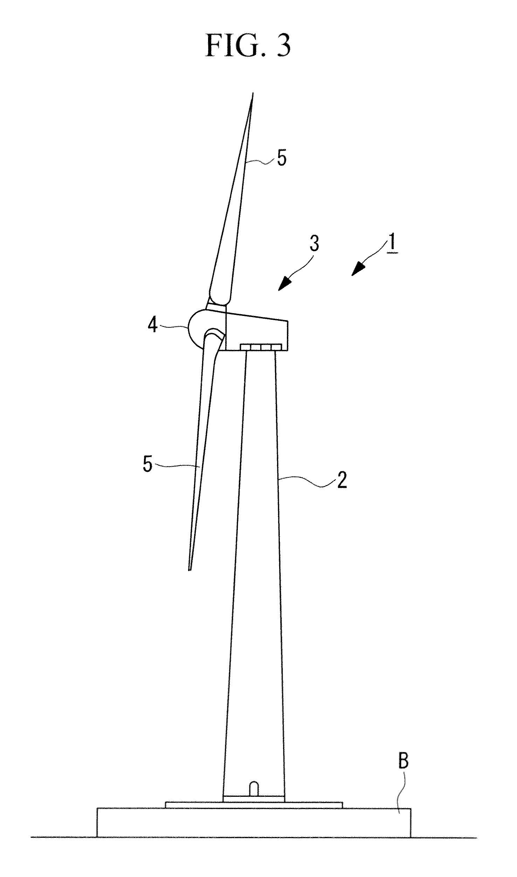

An embodiment of a wind turbine generator according to the present invention will be described below with reference to Figs. 1 to 4.
A wind turbine generator 1 shown in Fig. 3 is provided with a tower (also referred to as "support pillar") 2 erected on a foundation B, a nacelle 3 installed at a top end of the tower 2, and a rotor head 4 provided at the nacelle 3 by being supported thereat so as to be able to rotate about a rotation axis in a substantially horizontal lateral direction.
A plurality of (for example, three) turbine rotor blades 5 are attached to the rotor head 4 around the rotation axis thereof in a radiating manner. Accordingly, the force of wind striking the turbine rotor blades 5 from the direction of the rotation axis of the rotor head 4 is converted to a motive force that rotates the rotor head 4 about the rotation axis.

### <First Embodiment>

The above-described wind turbine generator 1 is provided with a yawing device 20 that is installed at the top end of the tower 2 for turning the nacelle 3 in order to match the orientation of the rotor head 4 with the constantly changing wind direction.
This yawing device 20 is provided with yawing sliding bearings 30 that bear a moment load in a tip-over direction (hereinafter referred to as "moment load") of the tower 2 mainly at side surfaces thereof in the top-bottom direction in order to support the nacelle 3 installed at the top end of the tower 2 in a turnable manner.

As shown in Fig. 1 for example, the yawing device 20 in this case is provided with a stationary gear 21 formed at an outer circumferential surface of the top end of the tower 2 and a drive gear 24 that is rotated by a yawing motor 23 secured to a nacelle-side base member (nacelle base plate) 22. Thus, by engaging the drive gear 24 with the stationary gear 21, the drive gear 24 revolves around the stationary gear 21 in accordance with the rotation direction of the yawing motor 23; therefore, the base member 22 and the yawing motor 23 turns clockwise or counter-clockwise relative to the stationary tower 2 that supports them via the yawing sliding bearings 30.

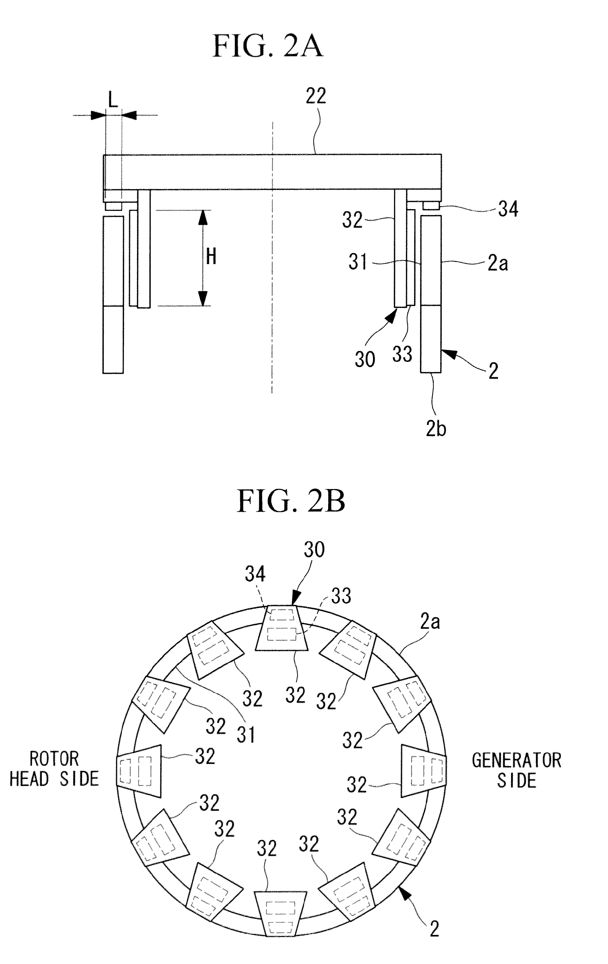

As shown in Fig. 1 and Figs. 2A and 2B, the yawing sliding bearings 30 of the yawing device 20 described above have a configuration in which, as the main sliding bearing members, vertical sliding bearing members (hereinafter referred to as "vertical bearing members") 33 that form sliding surfaces in the top-bottom direction are disposed between a stationary portion 31 formed at the top end of the tower 2 and turning portions 32 that are suspended from a bottom surface of the base member 22.
In addition, in the illustrated example configuration, horizontal sliding bearing members (hereinafter referred to as "horizontal bearing members") 34 are also provided between the top end of the tower 2 and the bottom surface of the base member 22; therefore, two surfaces, one in the vertical direction and one in the horizontal direction, are supported in this configuration.

The stationary portion 31 is an inner circumferential surface of a cylindrical member 2a secured at the top end of the tower 2, and the stationary gear 21 is formed at an outer circumferential surface of the cylindrical member 2a. This cylindrical member 2a normally is a separate member from a tower body 2b therebelow in order not only to finish the inner circumferential surface as a surface that comes into contact with the sliding surfaces of the vertical bearing members 33 but also to form the stationary gear 21 at the outer circumferential surface thereof.
The turning portions 32 are members that are secured to the bottom surface of the base member 22 with substantially L-shaped cross-sections, are divided into multiple parts in a circumferential direction of the stationary portion 31, and are arranged at equal pitch. That is, in the illustrated example configuration, as shown in Fig. 2B for example, 12 turning portions 32 are arranged at 30° pitch, and the individual turning portions 32 are secured to the vertical bearing members 33 in the top-bottom direction and to the horizontal bearing members 34 in the left-right direction.

As described above, in the wind turbine generator 1 of this embodiment, the nacelle 3 installed at the top portion of the tower 2 is turnably supported via the yawing sliding bearings 30 that bear the moment load mainly with the vertical bearing members 33 disposed at the side surface portions in the top-bottom direction, and the vertical bearing members 33 of the yawing sliding bearings 30 are disposed on an inner circumferential side of the tower 2. Accordingly, by employing a sliding bearing structure that can be divided into multiple parts in the circumferential direction, the nacelle 3 can be easily mounted to and assembled on the tower 2 through the process of inserting the turning portions 32, which are sliding portions on the nacelle 3 side, from the top portion of the tower 2 while hoisting the nacelle 3 with a crane, or the like. That is, the nacelle 3, to which the turning portions 32 are secured at the bottom surface thereof, is hoisted and inserted from above into the interior of the cylindrical member 2a secured at the top end of the erected tower 2, thereby connecting the vertical bearing members 33 and the horizontal bearing members 34, which are secured to the turning portions 32, with the stationary portion 31 in a slidable manner; therefore, the assembly of the yawing sliding bearings 30 is simultaneously completed with mounting of the nacelle 3.

When such sliding bearings 30 are employed, as compared with a conventional structure in which a rolling bearing is employed, greater frictional forces are generated at contact surfaces between the stationary portion 31 and both the vertical bearing members 33 and the horizontal bearing members 34 during turning of the nacelle 3. Accordingly, because the sliding bearings 30 increase the torque required for turning the nacelle 3, the output of the yawing motor 23 needs to be increased.

The sliding bearings 30 can, however, use the frictional force, which is the reason for increasing the motor output, and the load of the yawing motor 23, whose output has been increased, as braking forces. Accordingly, with the yawing device 20 provided with the yawing sliding bearings 30, braking mechanisms (the brake disk 16, brake pad 17, etc. shown in Fig. 18) needed to stop turning of the nacelle 3 are not required; therefore, it is effective for reducing the weight and costs. In addition, because a hydraulic circuit needed to operate the braking mechanisms is also not required, piping for a hydraulic pump and valves are reduced, which can simplify the structure.

Furthermore, because a structure in which the vertical bearing members 33 and the horizontal bearing members 34 are divided is possible, employing the above-described sliding bearings 30 makes it possible to suppress an increase in the costs of bearings due to size enlargement of the bearings and to eliminate the problem with the transportation limit by reducing the size of parts during transport.

The yawing sliding bearings 30 of this embodiment are not limited to the above-described configuration, and various modifications, such as those described below, are possible. Note that, in the following modifications, the same parts as in the above-described embodiment are given the same reference signs, and detailed descriptions thereof are omitted.

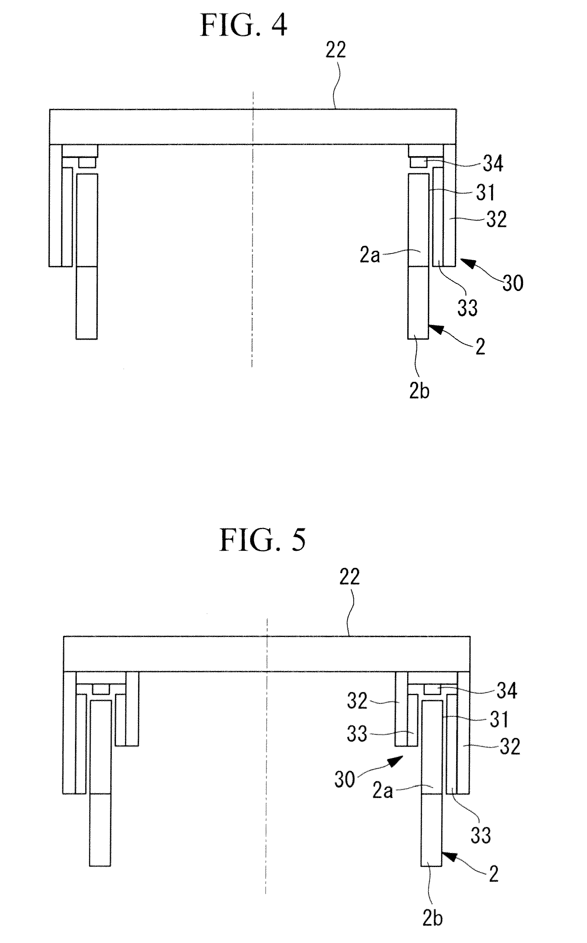

A first modification shown in Fig. 4 has a configuration in which, as the main sliding bearing members, the vertical bearing members 33 that form the sliding surfaces in the top-bottom direction are disposed between the stationary portion 31 formed at the top end of the tower 2 and the turning portions 32 that are suspended from the bottom surface of the base member 22. The stationary portion 31 in this case is the outer circumferential surface of the cylindrical member 2a secured at the top end of the tower 2, and the turning portions 32 to which the vertical bearing members 33 are secured are disposed at the outer side of the tower 2.
In addition, in the illustrated example configuration, the horizontal bearing members 34 are also provided between the top end of the tower 2 and the bottom surface of the base member 22; therefore, as with the above-described embodiment, two surfaces, one in the vertical direction and one in the horizontal direction, are supported in this configuration.

With such a configuration of the first modification, the vertical bearing members 33 of the yawing sliding bearings 30 are secured to the turning portions 32 and are disposed at the outer circumferential side of the tower 2; therefore, the same operational advantages as the above-described embodiment can be obtained.
Note that, the yawing motor (not shown) in this case rotates, for example, a drive gear (not shown) secured at an appropriate location, and a stationary gear (not shown) that engages with this drive gear is formed at the inner circumferential surface of the cylindrical member 2a.

A second modification shown in Fig. 5 has a configuration in which, as the main sliding bearing members, inner and outer vertical bearing members 33 that form the sliding surfaces in the top-bottom direction are disposed between the stationary portion 31 formed at the top end of the tower 2 and pairs of inner and outer turning portions 32 that are suspended from a bottom surface of the base member 22. The stationary portion 31 in this case is the inner circumferential surface and the outer circumferential surface of the cylindrical member 2a secured at the top end of the tower 2, and the turning portions 32 to which the vertical bearing members 33 are secured are disposed at the inner side and the outer side of the tower 2.
In addition, in the illustrated example configuration, the horizontal bearing members 34 are also provided between the top end of the tower 2 and the bottom surface of the base member 22; therefore, as with the above-described embodiment, three surfaces, including two, that is, inner and outer, surfaces in the vertical direction and one surface in the horizontal direction, are supported in this configuration.

With such a configuration of the second modification, the vertical bearing members 33 of the yawing sliding bearings 30 are secured to the turning portions 32 and are disposed at the inner circumferential side and the outer circumferential side of the tower 2; therefore, the same operational advantages as the above-described embodiment can be obtained.
Note that a yawing motor (not shown) in this case should be installed at an appropriate location, for example, at the interior of the tower 2, or the like.

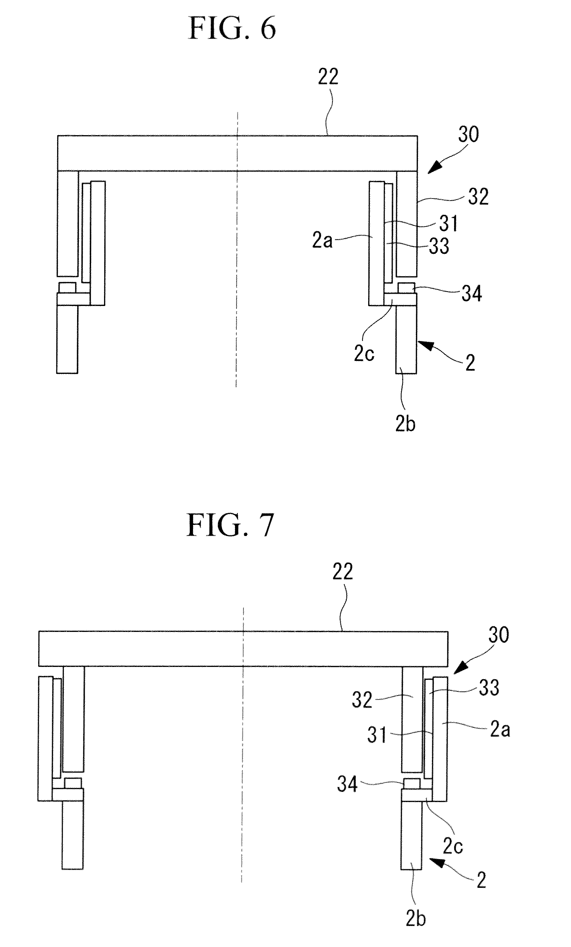

In a third modification shown in Fig. 6, unlike the embodiment and the modifications described so far, in which the vertical bearing members 33 are secured on the turning portion 32 side, the vertical bearing members 33 are secured on the stationary portion 31 side.
In the illustrated example configuration, a cylindrical member 2a with a smaller diameter than a tower body 2b is mounted at the top end of the tower 2 by being secured thereto, and, with this cylindrical member 2a serving as the stationary portion 31, the vertical bearing members 33 are secured to the outer circumferential surface thereof. That is, the vertical bearing members 33 of the yawing sliding bearings 30 are disposed on the inner circumferential side of the tower 2 by being secured to the stationary portion 31. The cylindrical member 2a in this case is secured at the top end of the tower body 2b via flange portion 2c formed at the bottom end the cylindrical member 2a.

Furthermore, in the illustrated example configuration, in addition to the above-described vertical bearing members 33, the horizontal bearing members 34 are also provided between the top end of the tower 2 (specifically, top surface of the flange portion 2c) and the bottom end surface of the turning portion 32.
Therefore, because the third modification shown in Fig. 6 is configured so as to support two surfaces, including the inner surface of the tower in the vertical direction and the surface in the horizontal direction, as with the above-described embodiment shown in Fig. 1 and Figs. 2A and 2B, the same operational advantages as the above-described embodiment can be obtained.

In a fourth modification shown in Fig. 7, the vertical bearing members 33 are secured to the stationary portion 31 as with the above-described third modification.
In the illustrated example configuration, a cylindrical member 2a with a larger diameter than the tower body 2b is mounted at the top end of the tower 2 by being secured thereto, and, with this cylindrical member 2a serving as the stationary portion 31, the vertical bearing members 33 are secured to the inner circumferential surface thereof. That is, unlike the third modification in which the vertical bearing members 33 are disposed on the inner circumferential side of the tower 2, the vertical bearing members 33 of the fourth modification are secured to the stationary portion 31 and are disposed on the outer circumferential side of the tower 2. The cylindrical member 2a in this case is secured at the top end of tower body 2b via the flange portion 2c formed at the bottom end the cylindrical member 2a.

Furthermore, in the illustrated example configuration, in addition to the above-described vertical bearing members 33, the horizontal bearing members 34 are also provided between the top end of the tower 2 (specifically, the top surface of the flange portion 2c) and the bottom end surfaces of the turning portion 32.
Therefore, because the fourth modification shown in Fig. 7 is configured so as to support two surfaces, including the outer surface of the tower in the vertical direction and the surface in the horizontal direction, as with the above-described first modification shown in Fig. 4, the same operational advantages as the above-described embodiment can be obtained.

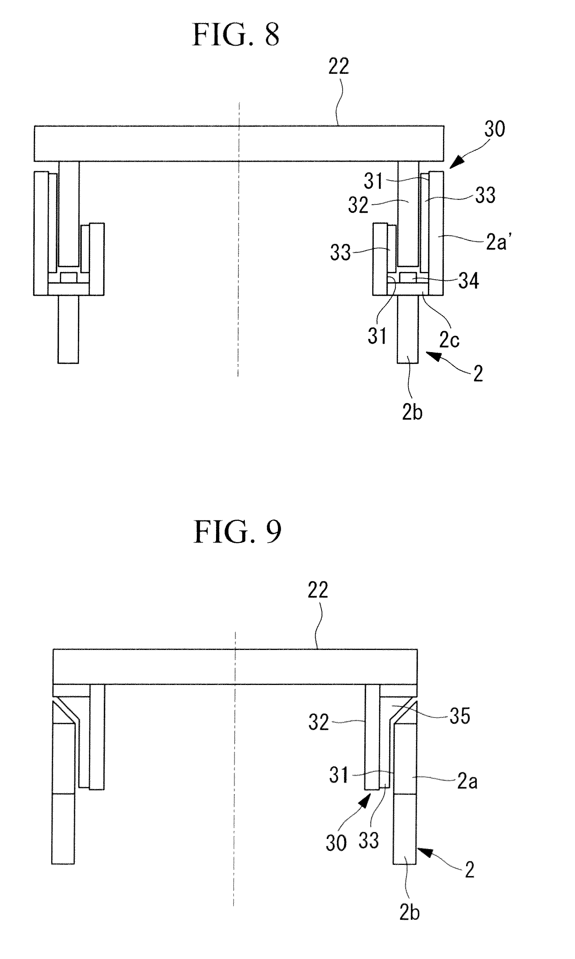

In a fifth modification shown in Fig. 8, the vertical bearing members 33 are secured to the stationary portion 31 as with the above-described third modification and the fourth modification.
In the illustrated example configuration, a double-walled cylindrical member 2a' with a smaller diameter and a larger diameter than the tower body 2b is mounted at the top end of the tower 2 by being secured thereto, and, with this double-walled cylindrical member 2a' serving as the stationary portion 31, the vertical bearing members 33 are secured to the opposing surfaces of the double cylinder. That is, the vertical bearing members 33 of the fifth modification have a configuration that combines the third modification, in which the vertical bearing members 33 are disposed on the inner circumferential side of the tower 2, and the fourth modification, in which the vertical bearing members 33 are disposed on the outer circumferential side of the tower 2, and are disposed on the inner circumferential side and the outer circumferential side of the tower 2 by being secured to the stationary portion 31. The double-walled cylindrical member 2a' in this case is secured at the top end of tower body 2b via the flange portion 2c formed at the bottom end the double-walled cylindrical member 2a'.

Furthermore, in the illustrated example configuration, in addition to the above-described vertical bearing members 33, the horizontal bearing members 34 are also provided between the top end of the tower 2 (specifically, the top surface of the flange portion 2c) and the bottom end surface of the turning portion 32.
Therefore, because the fifth modification shown in Fig. 8 is configured so as to support three surfaces, including the two, that is, inner and outer, surfaces in the vertical direction and one surface in the horizontal direction, as with the above-described second modification shown in Fig. 5, the same operational advantages as the above-described embodiment can be obtained.

In this way, in the wind turbine generator 1 of this embodiment described above, the nacelle 3 installed at the top portion of the tower 2 is turnably supported via the yawing sliding bearings 30 that bear the moment load mainly with the vertical bearing members 33 disposed at the side surface portion in the top-bottom direction, and the vertical bearing members 33 of the yawing sliding bearing 30 are disposed on at least one of the inner circumferential side and the outer circumferential side of the tower 2; therefore, by employing the yawing sliding bearings 30, which can have a divided construction, assembly can be facilitated through the process of inserting the sliding portions on the nacelle 3 side from the top portion of the tower 2.

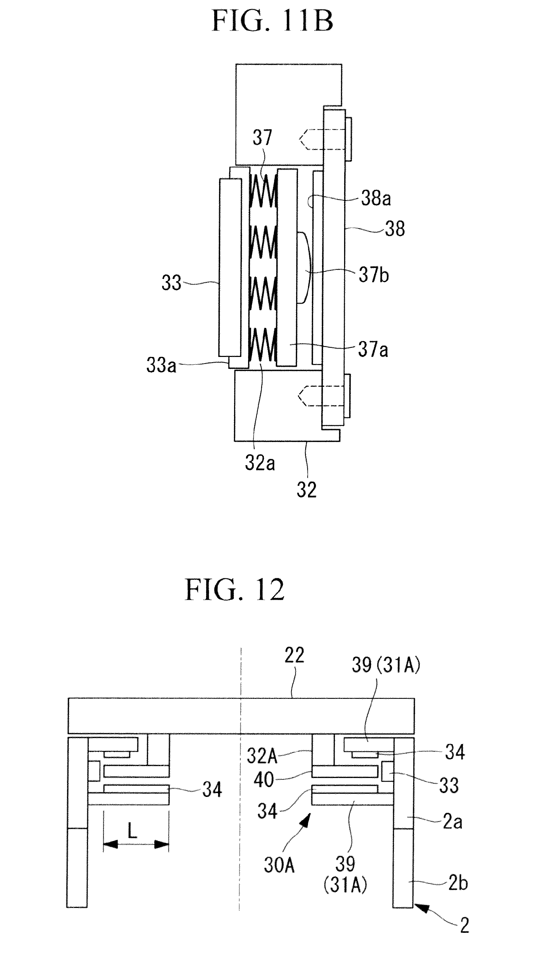

With the sliding bearings 30 of the embodiment and the modifications described above, it is preferable that the side-surface length (H) of the vertical bearing members 33 be set to be at least twice the horizontal-direction length (L) of the sliding bearing members that bear the moment load mainly at the flat portions thereof. The side-surface length (H) in this case is the length in the top-bottom direction (see Fig. 2A) of the vertical bearing members 33 that slide in contact with the surface of the stationary portion 31, and the horizontal-direction length (L) of the sliding bearing members is the length in the left-right direction (see Fig. 12) of the horizontal bearing members 34 that bear the moment load mainly at the flat portions thereof, as in Fig. 2A, as well as the sliding bearings 30A, which will be described below on the basis of Fig. 12, etc. as a second embodiment.

In this way, the sliding bearings 30 having the vertical bearing members 33 whose side-surface length (H) is adequately ensured can reliably bear the moment load for which the force received from the nacelle 3 side is considerably larger than the weight of the nacelle 3 itself. That is, the areas of the sliding surfaces are increased by adequately ensuring the side-surface length (H) of the vertical bearing members 33, and smooth turning is made possible by suppressing contact pressure even if a large moment load acts from the nacelle 3 side.

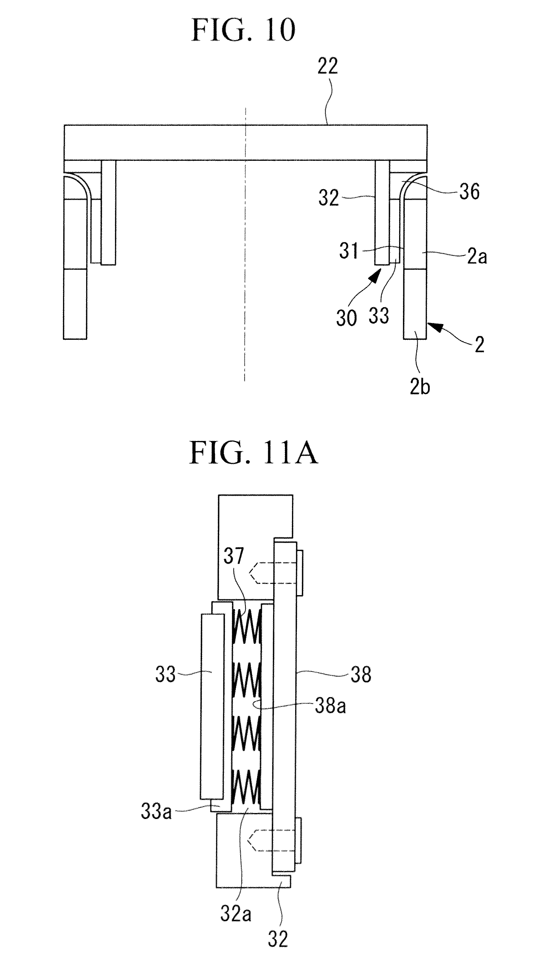

In addition, with the embodiment and the modifications thereof described above, it is desirable that horizontal-direction contact surfaces of the sliding bearing members be inclined surfaces or curved surfaces as in, for example, a sixth modification shown in Fig. 9 and a seventh modification shown in Fig. 10.
With the sixth modification shown in Fig. 9, inclined bearing members 35 are provided at the top end of the vertical bearing members 33. The inclined bearing members 35 are the above-described horizontal bearing members 34 that are formed to have inclined surfaces, and the inclined surfaces decline from the outer circumferential side of the tower 2 toward a turning center of the nacelle 3. The inclined bearing members 35 having such inclined surfaces can also bear the moment load in addition to having the function of the horizontal bearing members 34 for mainly bearing the weight of the nacelle 3 itself. Accordingly, the inclined bearing members 35 described in this modification assist the function of the vertical bearing members 33 for mainly bearing the moment load. That is, because the inclined bearing members 35 can bear the moment load with the inclined surfaces, the moment load that acts on the side surface portions of the tower 2 can be reduced.

Furthermore, the inclined bearing members 35 have a self-aligning property that aligns the turning center of the nacelle 3 with the axial center of the tower 2. That is, because a force that moves the turning center of the nacelle 3 acts in the direction of the axial center on the tower 2 side, misalignment between the turning center of the nacelle 3 and the axial center of the tower 2 is reduced, and backlash between the stationary and drive gears that are engaged can be maintained at a certain level.
Accordingly, the uneven contact that has been a problem in conventional sliding bearings that involve flat-surface support becomes less likely to occur, and uneven wear that occurs in the sliding bearings can be prevented or suppressed. Therefore, because rattling is less likely to occur at the top end of the tower 2, the turning movement of the nacelle 3 installed at the top end of the tower 2 becomes stable.
Note that, the top end of the cylindrical member 2a that comes in contact with the inclined bearing surfaces 35 naturally are also made to have inclined surfaces that match the inclined bearing surfaces 35.

In addition, as in the seventh modification shown in Fig. 10, curved bearing members 36 may be employed instead of the above-described inclined bearing members 35. The curved bearing members 36 are the above-described horizontal bearing members 34 that are formed to have curved surfaces and have downward inclined surfaces, formed as a concave curved surface, from the outer circumferential side of the tower 2 toward the axial center side thereof. The curved bearing members 36 having such concave curved surfaces can also bear the moment load in addition to having the function of the horizontal bearing members 34 for mainly bearing the weight of the nacelle, 3 itself. Accordingly, the curved bearing members 36 assist the function of the vertical bearing members 33 for mainly bearing the moment load.

Furthermore, the curved bearing members 36 have a self-aligning property that aligns the turning center of the tower 2 with the axial center thereof, as with the above-described inclined bearing members 35; therefore, uneven wear that occurs in the sliding bearing members is prevented or suppressed, and the turning movement of the nacelle 3 installed at the top end of the tower 2 can be stabilized.
Note that, the top end of the cylindrical member 2a that comes in contact with the curved bearing surfaces 36 naturally is also made to have an inclined surface (convex curved surface) that matches the curved bearing surfaces 36.

In addition, both the inclined bearing members 35 and the curved bearing members 36 described above decline toward the axial center side of the tower 2; however, the same operational advantages can be obtained even if the inclined surfaces or the curved surfaces decline in the opposite direction from the axial center side of the tower 2 toward the outer circumferential surface side thereof.
Furthermore, the curved bearing members 36 are not limited to the concave curved surfaces described above, and they may be, for example, convex curved surfaces.

The embodiment and the modifications described above show examples of spring-preloaded structures in which contact pressure is equalized by, as shown in Fig. 11A for example, providing elastic members 37 such as coil springs or the like that bias the vertical bearing members 33 in the contact surface direction.
In this example configuration, reference sign 33a in figure is base members of the vertical bearing members 33; for example, hollow portions 32a are provided in advance in the turning portions 32 to which the vertical bearing members 33 are secured and, after installing the vertical bearing members 33 and the elastic members 37 at predetermined positions, lid-like pressing plates 38 having protruding portions 38a are secured with bolts at openings on the opposite side.

In addition, in the present invention, as shown in Fig. 11B for example, plate-like holding members 37a that support opposite ends of the above-described elastic members 37 are provided, and pivoting portions 37b are formed for the holding members 37a. As a result, the holding members 37a of the elastic members 37 are pivotingly supported on the protruding portions 38a of the pressing plates 38 in a state in which the vertical bearing members 33 and the elastic members 37 are accommodated at predetermined positions inside the hollow portions 32a.

As a result, even when the inclination level of the nacelle 3 relative to the tower 2 exceeds the absorbable range of the elastic members 37, thus posing a risk of causing uneven contact with the vertical bearing members 33, pressure at the contact surfaces can be equalized by adjusting the pressing of the vertical bearing members 33 at the side surface portions with the pivot support. Therefore, the uneven contact can be even more reliably prevented, and the turning movement of the nacelle 3 can be stabilized by preventing or suppressing the uneven wear that occurs at the sliding bearing members.

### <Second Embodiment>

Next, a second embodiment of the wind turbine generator according to the present invention will be described on the basis of Figs. 12 to 14. Note that, the same reference signs are given to the same components as those in the above-described embodiment, and detailed descriptions thereof will be omitted.
As in an embodiment shown in Fig. 12, in this embodiment, the nacelle 3 provided at the top portion of the tower 2 is turnably supported via yawing sliding bearings 30A that bear the moment load mainly at the top and bottom flat portions thereof.

In the illustrated yawing sliding bearings 30A, the horizontal bearing members 34 are disposed on the inner circumferential side of the tower 2. The horizontal bearing members 34 are secured to stationary portions 31A on the tower side 2, together with the vertical bearing members 33, which are also disposed on the inner circumferential side of the tower 2.
In this case, pairs of top and bottom horizontal opposing plates 39 that are provided at the inner circumferential side of the cylindrical member 2a are utilized as the stationary portions 31A, and pairs of top and bottom horizontal bearing members 34 are secured to the opposing surfaces of the two horizontal opposing plates 39. In addition, the vertical bearing members 33 are secured to the inner circumferential surface of the cylindrical member 2a.

Turning portions 32A on the nacelle 3 side, on the other hand, have substantially L-shaped sectional shapes since members thereof suspended from the bottom surface of the base plate 22 are bent in the outer circumferential direction of the tower 2 and form horizontal flange portions 40. The horizontal flange portions 40 slide in a state in which both the top and bottom surfaces thereof are in contact with the above-described horizontal bearing members 34 and distal ends on the outer circumferential side are in contact with the above-described vertical bearing members 33.
Because the thus-configured yawing sliding bearings 30A are provided, problems with regard to costs and land transportation that arise with the size enlargement can be solved by employing a sliding bearing structure that can have a divided construction.

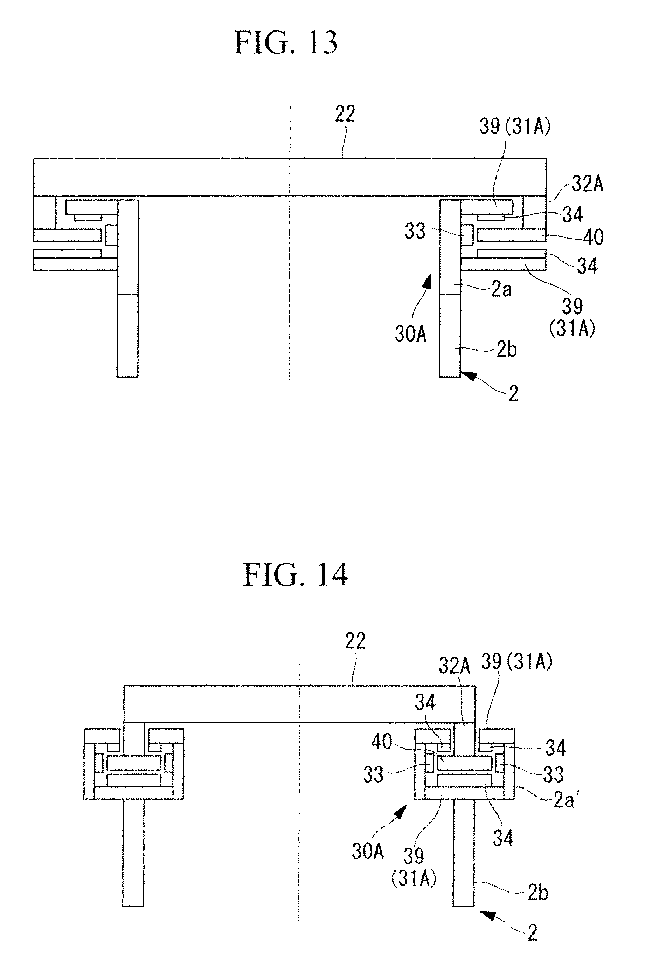

Unlike the above-described embodiment, in a first modification of the yawing sliding bearings 30A shown in Fig. 13, the horizontal bearing members 34 are disposed on the outer circumferential side of the tower 2. The horizontal bearing members 34 are secured to the stationary portions 31A on the tower 2 side, together with the vertical bearing members 33 that are also disposed on the outer circumferential side of the tower 2.
In this case, the pairs of top and bottom horizontal opposing plates 39 provided at the outer circumferential side of the cylindrical member 2a are utilized as the stationary portions 31A, and the pairs of top and bottom horizontal bearing members 34 are secured to the opposing surfaces of the two horizontal opposing plates 39. In addition, the vertical bearing members 33 are secured to the outer circumferential surface of the cylindrical member 2a.

The turning portions 32A on the nacelle 3 side, on the other hand, have substantially L-shaped sectional shapes, since the members suspended from the bottom surface of the base plate 22 are bent in the axial center direction of the tower 2 to form the horizontal flange portions 40, and slide in a state in which both the top and bottom surfaces of the horizontal flange portions 40 are in contact with the above-described horizontal bearing members 34 and the distal ends on the inner circumferential side are in contact with the above-described vertical bearing member 33.
The thus-configured yawing sliding bearings 30A are sliding bearing structures that can have a divided construction, as with the above-described embodiment in Fig. 12, and are capable of solving the problems with regard to costs and land transportation that arise with the size enlargement.

Unlike the above-described embodiment, in a second modification of the yawing sliding bearings 30A shown in Fig. 14, the horizontal bearing members 34 are disposed on both the inner circumferential side and the outer circumferential side of the tower 2. The horizontal bearing members 34 are secured to the stationary portions 31A on the tower 2 side, together with the vertical bearing members 33 that are also disposed on both the inner circumferential side and the outer circumferential side of the tower 2.
In this case, the pairs of top and bottom horizontal opposing plates 39 provided at the double-walled cylindrical member 2a' are utilized as the stationary portions 31A, and the pairs of top and bottom horizontal bearing members 34 are secured to both opposing surfaces of the horizontal opposing plates 39 so as to extend from the interior to the exterior of the tower 2. In addition, the pairs of vertical bearing members 33 are secured to the inner circumferential surface of the double-walled cylindrical member 2a' so as to face each other.

The turning portions 32A on the nacelle 3 side, on the other hand, have substantially T-shaped sectional shapes wherein the members suspended from the bottom surface of the base plate 22 have horizontal flange portions 40, and slide in a state in which both the top and bottom surfaces of the horizontal flange portions 40 are in contact with the above-described horizontal bearing members 34 and distal ends on the inner circumferential side and the outer circumferential side are in contact with the above-described vertical bearing members 33.
The thus-configured yawing sliding bearings 30A are sliding bearing structures that can have a divided construction, as in the above-described embodiment in Fig. 12, and are capable of solving the problems with regard to costs and land transportation that arise with the size enlargement.

In this way, in this embodiment, the vertical bearing members 33 and the horizontal bearing members 34 of the yawing sliding bearings 30A are provided on at least one of the inner circumferential side and the outer circumferential side of the tower 2, and, moreover, the vertical bearing members 33 and the horizontal bearing members 34 are secured on the tower 2 side; therefore, advantages are afforded, in particular, in that the yawing sliding bearings 30A mounted to the wind turbine generator 1 can be accessed from the interior of the tower 2. Accordingly, excellent maintainability can be obtained for the yawing sliding bearings 30A of this embodiment.

To give specific descriptions, the yawing sliding bearings 30A shown in Figs. 12, 13, and 14 are arranged by being divided into multiple portions in the circumferential direction, as with the yawing sliding bearing 30 shown in Fig. 2B. Accordingly, with the arrangement in Fig. 12 at the inner circumference, maintenance work can be performed by accessing the horizontal bearing members 34 and the vertical bearing members 33 from the interior of the tower 2. Note that, the vertical bearing members 33 on the top side and at the back of the horizontal bearing members 34 can be accessed from gaps between the adjacent yawing sliding bearings 30A.
Furthermore, also in the structure in Fig. 13, target parts can be accessed during maintenance work from the interior of the tower 2 by utilizing the gaps between adjacent yawing sliding bearings 30A.
In addition, also in the structure of Fig. 14, target parts can be similarly accessed during maintenance work from the interior of the tower 2. Furthermore, with the configuration of Fig. 14, because the bearing members are provided on both sides of the tower 2, the tip-over moment on joining bolts is reduced, thereby affording an advantage in that the final tower diameter can be reduced further.

### <Third Embodiment>

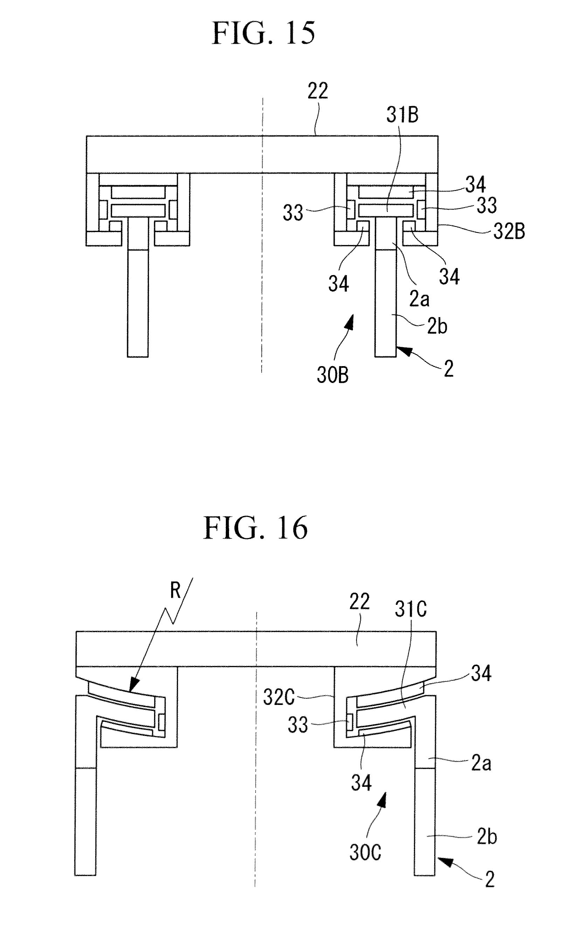

Next, a third embodiment of the wind turbine generator according to the present invention will be described on the basis of Fig. 15. Note that, the same reference signs are given to the same components as those in the above-described embodiment, and detailed descriptions thereof will be omitted.
In this embodiment, the nacelle 3 provided at the top portion of the tower 2 is turnably supported via yawing sliding bearings 30B that bear the moment load mainly at the top and bottom flat portions thereof. In the yawing sliding bearings 30B shown in Fig. 15, the horizontal bearing members 34 are provided on both the inner circumferential side and the outer circumferential side of the tower 2. The horizontal bearing members 34 are secured on the nacelle 3 side, together with the vertical bearing members 33.

Specifically, a stationary portion 31B provided at the top of the tower 2 is formed in T-shape and the vertical bearing members 33 and the horizontal bearing members 34 are secured to the inner circumferential surfaces of turning portions 32B arranged so as to surround the stationary portion 32B, thereby disposing the vertical bearing members 33 and the horizontal bearing members 34 on both the inner circumferential side and the outer circumferential side of the tower 2.
With a wind turbine generator 1 provided with such yawing sliding bearings 30B, it is possible to employ a sliding bearing structure that can have a divided construction and to reduce the diameter of the top portion of the tower 2.

That is, by providing the T-shaped stationary portion 31B at the top of the tower 2 and by disposing the vertical bearing members 33 and the horizontal bearing members 34 on both the inner circumferential side and the outer circumferential side of the tower 2 by securing them on the inner circumferential surfaces of the turning portions 32B, bolts that join the top of the tower 2 and the nacelle 3 can be arranged in a left-right symmetry. Therefore, because the bending moment that acts on the bolts is reduced and the force that pulls them out can be lowered, the number of bolts can be reduced, and the diameter of the top portion of the tower 2 can be reduced.

### <Fourth Embodiment>

Next, a fourth embodiment of the wind turbine generator according to the present invention will be described on the basis of Fig. 16. Note that, the same reference signs are given to the same components as those in the above-described embodiment, and detailed descriptions thereof will be omitted.
In this embodiment, the nacelle 3 provided at the top portion of the tower 2 is turnably supported via yawing sliding bearings 30C that bear the moment load mainly at the top and bottom flat portions thereof. In the yawing sliding bearings 30C shown in Fig. 16, the horizontal bearing members 34 are provided on the inner circumferential side of the tower 2. The horizontal bearing members 34 are secured to turning portions 32C on the nacelle 3 side, together with the vertical bearing members 33.

In the illustrated embodiment, a stationary portion 31C and the horizontal bearing members 34 are formed in curved shapes, thereby providing the yawing sliding bearings 30C with a self-aligning property. Although the illustrated curved surfaces are formed as concave curved surfaces that decline in the direction of the axial center of the tower 2, convex curved surfaces or inclined surfaces may be employed.
With the yawing sliding bearings 30C provided with the self-aligning property in this way, uneven wear due to uneven contact at the sliding bearing portions during turning of the nacelle 3 can be prevented or suppressed; therefore, the turning motion of the nacelle 3 can be stabilized.

### <Fifth Embodiment>

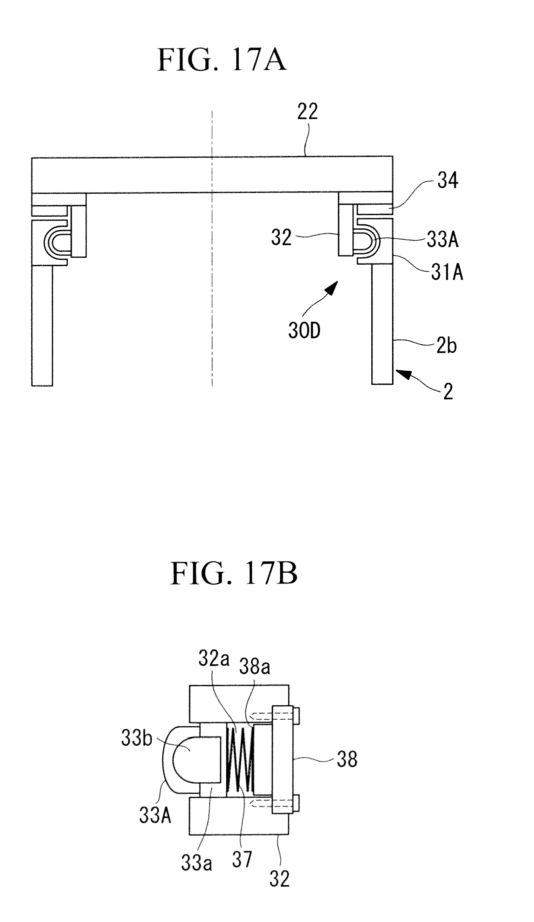

Next, a fifth embodiment of the wind turbine generator according to the present invention will be described on the basis of Figs. 17A and 17B. Note that, the same reference signs are given to the same components as those in the above-described embodiments, and detailed descriptions thereof will be omitted.
In yawing sliding bearings 30D of this embodiment, vertical bearing members 33A with convex curved surfaces provided with spring-preloaded structures are employed. The illustrated yawing sliding bearings 30D are secured to the turning portions 32 on the nacelle 3 side, and concave curved portions that come in contact with the convex curved surfaces of the vertical bearing members 33A are formed at the stationary portion 31A on the tower 2 side.

The spring-preloaded mechanism of the vertical bearing member 33A is practically the same as the above-described spring-preloaded structures in Figs. 11A and 11B, and the reference sign 32a in the figures is a hollow portion, 33a is a base member, 37 is an elastic member, 38 is a pressing plate, 38a is a protruding portion, and 33b is a protruding-portion base material that holds the vertical bearing member 33A at a convex curved surface thereof.
By employing such a spring-preloaded mechanism, operational advantages that are substantially similar to those of the above-described pivot support can be obtained, and, even when the inclination level of the nacelle 3 relative to the tower 2 exceeds the absorbable range of the elastic members 37, uneven contact can be prevented by evenly adjusting the pressure at the contact surfaces. Therefore, because a self-aligning property that reliably prevents the uneven contact can be obtained, the turning movement of the nacelle 3 can be stabilized by preventing or suppressing uneven wear that occurs at the sliding bearing members.

In this way, by employing yawing bearings having dividable constructions as bearings that join the tower 2 and the nacelle 3, the above-described wind turbine generator 1 of the present invention can facilitate the size enlargement by solving at least one of the various problems that arise with the size enlargement, namely, problems with the costs of bearings, problems with land transportation, the problem of uneven wear, problems with ease of assembly, and problems with bolt strength.

In addition, the above-described embodiments and modifications are not limited to those described on the basis of the illustrations, and appropriately combined configurations are possible, such as, for example employing the spring-preloaded mechanism in the horizontal bearing member 34.
Furthermore, the present invention is not limited to the above-described embodiments, and appropriate alterations are possible within a range that does not depart from the spirit thereof.

## Claims

1. A wind turbine generator that turnably supports a nacelle installed at the top of a tower via a yawing sliding bearing,
wherein a sliding bearing member of the yawing sliding bearing is provided on at least one of an inner circumferential surface side and an outer circumferential side of the tower, and the side-surface length (H) of the sliding bearing member is set to be at least twice the horizontal-direction length (L) of the sliding bearing member.

2. A wind turbine generator wherein a nacelle installed at the top of a tower is turnably supported via a yawing sliding bearing that bears a moment load in a tip-over direction mainly at top and bottom flat portions thereof; a sliding bearing member of the yawing sliding bearing is provided on at least one of an inner circumferential surface side and an outer circumferential side of the tower; and the sliding bearing member is secured on the tower side.

3. A wind turbine generator wherein a nacelle installed at the top of a tower is turnably supported via a yawing sliding bearing that bears a moment load in a tip-over direction mainly at top and bottom flat portions thereof; sliding bearing members of the yawing sliding bearing are provided on both an inner circumferential surface side and an outer circumferential side of the tower; and the sliding bearing members are secured on the nacelle side.

4. A wind turbine generator according to one of Claims 1 to 3, wherein contact surfaces of the sliding bearing member(s) in the horizontal direction are curved surfaces or inclined surfaces having centers thereof on an axis of the tower.

5. A wind turbine generator according to one of Claims 1 to 4, comprising:
elastic members that bias the sliding bearing member(s) in directions of contact surfaces thereof,
wherein base members of the elastic members are pivotingly supported.
